# EUROPEAN PATENT APPLICATION

(11) **EP 3 576 407 A1**
(43) Date of publication of application: **04.12.2019**
(21) Application number: 18175281.7
(22) Date of filing: 31.05.2018
(51) Int. Cl.: H04N 13/128, H04N 13/366

(54) **STEREOSCOPIC CONTENT**

(71) Applicant: Nokia Technologies Oy, 02610 Espoo (FI)
(72) Inventor: JOKELA, Tero, 33820 Tampere (FI); PIIPPO, Petri, 37500 Lempäälä (FI); SALMIMAA, Marja, 33610 Tampere (FI); VETEK, Akos, 00790 Helsinki (FI); NURMI, Mikko, 33580 Tampere (FI); LEANDER, Suvi, 34240 Kämmenniemi (FI)
(74) Representative: Nokia EPO representatives

(57) **Abstract**

An apparatus comprising means for: identifying for highlighting a first portion of a scene defined by stereoscopic content comprising left-eye content and right-eye content; selectively applying a stereoscopic mapping to the first portion of the scene, but not a second portion of the scene, to generate adapted stereoscopic content comprising adapted left-eye content and adapted right-eye content; and causing rendering of the adapted stereoscopic content by displaying the adapted left-eye content to a left eye of a user and the adapted right-eye content to a right eye of a user.

## Description

### TECHNOLOGICAL FIELD

Embodiments of the present disclosure relate to stereoscopy and stereoscopic content.

### BACKGROUND

Stereoscopy is a technique for creating or enhancing an illusion of depth in an image by means of stereopsis for binocular vision.

Stereoscopic content comprises left-eye content that is displayed to a left eye of a user and right-eye content that is displayed to a right eye of the user. This left-eye and right-eye content are then combined in the brain of the user to give the perception of three-dimensional depth.

### BRIEF SUMMARY

According to various, but not necessarily all, embodiments there is provided an apparatus comprising means for:
identifying for highlighting a first portion of a scene defined by stereoscopic content comprising left-eye content and right-eye content;
selectively applying a stereoscopic mapping to the first portion of the scene but not to a second, different, portion of the scene, to generate adapted stereoscopic content comprising adapted left-eye content and adapted right-eye content; and
causing rendering of the adapted stereoscopic content by displaying the adapted left-eye content and the adapted right-eye content.

In some but not necessarily all examples, the adapted left-eye content is displayed to a left eye of a user and the adapted right-eye content is displayed to a right eye of a user.

In some but not necessarily all examples, the apparatus comprises means for applying a first stereoscopic mapping to the first portion of the scene and to apply a second, different, stereoscopic mapping to a second, different, portion of the scene to generate the adapted stereoscopic content.

In some but not necessarily all examples, the second portion of the scene borders the first portion of the scene on multiple sides.

In some but not necessarily all examples, the scene is a user-selectable part of an image. In some but not necessarily all examples, an orientation of a user's head is tracked to determine the part of the image defining the scene.

In some but not necessarily all examples, the first portion of the scene is an area wholly within the scene.

In some but not necessarily all examples, the first portion of the scene corresponds to a detected object within the scene.

In some but not necessarily all examples, the apparatus comprises means for digital image processing to detect the area or the object.

In some but not necessarily all examples, the stereoscopic mapping applied to the first portion of the scene magnifies the first portion of the scene in the adapted left-eye content and the adapted right-eye content.

In some but not necessarily all examples, the stereoscopic mapping applied to the first portion of the scene changes a virtual depth of the first portion of the scene as defined by the adapted left-eye content and the adapted right-eye content.

In some but not necessarily all examples, a first disparity is applied to the first portion of the scene defined by the left-eye content and a second disparity is applied to the first portion of the scene defined by the right-eye content, the first disparity being a different disparity than is applied to other portions of the scene defined by the left-eye content and the second disparity being a different disparity than is applied to other portions of the scene defined by the right-eye content.

In some but not necessarily all examples, a common first disparity, in the opposite sense, is applied to the first portion of the scene defined by the left-eye content and defined by the right-eye content, the first disparity being a different disparity than is applied to other portions of the scene.

In some but not necessarily all examples, a disparity associated with the stereoscopic content is selectively changed for the first portion of the scene. In some but not necessarily all examples, the disparity change is the same value but the opposite sense, for the left-eye content and the right-eye content. In some but not necessarily all examples, the disparity change is defined by a Euclidian shift.

In some but not necessarily all examples, the stereoscopic mapping applied to the first portion comprises a change in a virtual camera separation associated with the stereoscopic content.

In some but not necessarily all examples, the first portion of the scene is additionally rescaled to generate the adapted stereoscopic content.

In some but not necessarily all examples, the apparatus comprises means for processing the adapted stereoscopic content to reduce artefacts arising from the stereoscopic mapping. In some but not necessarily all examples, the means for reducing artefacts comprises means for applying a transitioning effect at at least some boundaries of the first portion of the scene.

In some but not necessarily all examples, the stereoscopic mapping applied to the first portion is applied with respect to a horizontal direction and wherein the stereoscopic mapping applied to the first portion is not applied with respect to a vertical direction.

According to various, but not necessarily all, embodiments there is provided a method comprising: identifying for highlighting a first portion of a scene defined by stereoscopic content comprising left-eye content and right-eye content; selectively applying a stereoscopic mapping to the first portion of the scene, but not a second portion of the scene, to generate adapted stereoscopic content comprising adapted left-eye content and adapted right-eye content; and causing rendering of the adapted stereoscopic content by displaying the adapted left-eye content and the adapted right-eye content.

According to various, but not necessarily all, embodiments there is provided a computer program that when run on a processor enables the processor to perform: identifying for highlighting a first portion of a scene defined by stereoscopic content comprising left-eye content and right-eye content; selectively applying a stereoscopic mapping to the first portion of the scene, but not a second portion of the scene, to generate adapted stereoscopic content comprising adapted left-eye content and adapted right-eye content; and causing rendering of the adapted stereoscopic content by displaying the adapted left-eye content and the adapted right-eye content.

According to various, but not necessarily all, embodiments there is provided an apparatus comprising:
at least one processor; and
at least one memory including computer program code
the at least one memory and the computer program code configured to, with the at least one processor, cause the apparatus at least to perform:
   identifying for highlighting a first portion of a scene defined by stereoscopic content comprising left-eye content and right-eye content; selectively applying a stereoscopic mapping to the first portion of the scene, but not a second portion of the scene, to generate adapted stereoscopic content comprising adapted left-eye content and adapted right-eye content; and causing rendering of the adapted stereoscopic content by displaying the adapted left-eye content and the adapted right-eye content.

According to various, but not necessarily all, embodiments there is provided examples as claimed in the appended claims.

### BRIEF DESCRIPTION

Some example embodiments will now be described with reference to the accompanying drawings in which:
FIG. 1 shows an example embodiment of the subject matter described herein;
FIG. 2 shows another example embodiment of the subject matter described herein;
FIG. 3 shows an example embodiment of the subject matter described herein;
FIG. 4A shows another example embodiment of the subject matter described herein;
FIG. 4B shows an example embodiment of the subject matter described herein;
FIG. 5A shows another example embodiment of the subject matter described herein;
FIG. 5B shows an example embodiment of the subject matter described herein;
FIG. 6 shows another example embodiment of the subject matter described herein;
FIG. 7A shows an example embodiment of the subject matter described herein;
FIG. 7B shows an example embodiment of the subject matter described herein;
FIG. 8 shows another example embodiment of the subject matter described herein;
FIG. 9 shows an example embodiment of the subject matter described herein;
FIG. 10 shows another example embodiment of the subject matter described herein;
FIG. 11 shows an example embodiment of the subject matter described herein;
FIG. 12 shows another example embodiment of the subject matter described herein.

### DEFINITIONS

An apparatus is a physical entity.

'Means' references that part of a physical entity that can perform a function. The part may be dedicated to that function or may perform other functions. The functionality can, for example, be encoded in hardware within circuits or encoded in software within instructions.

'Highlighting' is a deliberate visual differentiator.

A scene is what is seen.

Stereoscopic content is content that creates a stereoscopic effect when rendered. It comprises left-eye content to be displayed to a left eye and right-eye content to be displayed to a right eye. Stereoscopy uses overlapping images from different viewpoints to produce a three-dimensional model, the stereoscopic effect, that emulates true binocular vision.

A stereoscopic mapping is a mapping applied to stereoscopic content that has a controlled stereoscopic effect.

Adapted stereoscopic content is stereoscopic content to which a stereoscopic mapping has been selectively applied. The controlled stereoscopic effect is selectively created when the adapted stereoscopic content is rendered. The adapted stereoscopic content comprises left-eye content to be displayed to a left eye and right-eye content to be displayed to a right eye.

### DETAILED DESCRIPTION

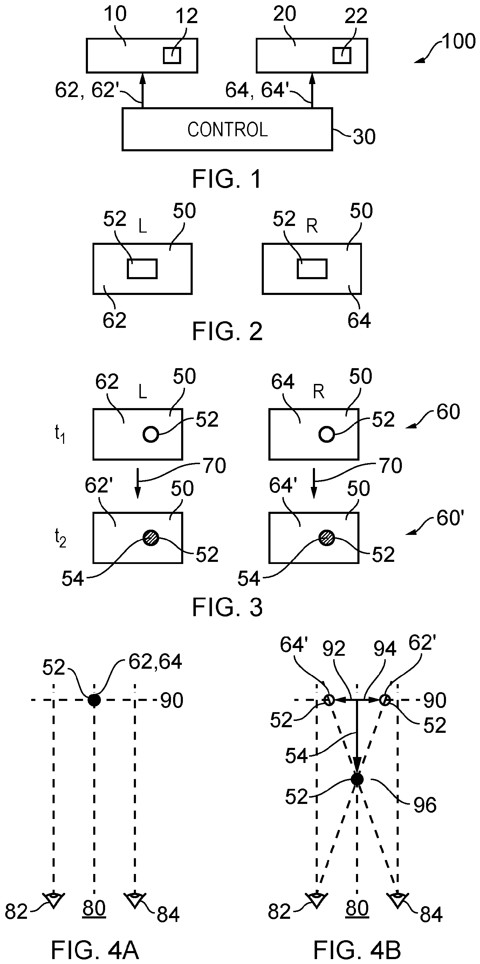

Fig 1 illustrates an example of an apparatus 100. In some examples, the apparatus 100 is an apparatus configured to adapt stereoscopic content 60 to create adapted stereoscopic content 60'. In some examples, the apparatus 100 is additionally configured to render the adapted stereoscopic content 60'.

An example of stereoscopic content 60 is illustrated in Fig 2. The stereoscopic content 60 comprises left-eye content 62 and right-eye content 64. Likewise, adapted stereoscopic content 60' comprises left-eye content 62' and right-eye content 64', where one or both have been adapted. In the following it will be assumed that both have been adapted and the adapted stereoscopic content 60' will be considered to comprise adapted left-eye content 62' and adapted right-eye content 64', however, this is not always the case.

The scene 50 comprises a first portion 52. As illustrated in the example of Fig 3, a first portion 52 of a scene 50 defined by the stereoscopic content 60 is highlighted 54. The highlighting is achieved by selectively applying a stereoscopic mapping 70 to the first portion 52 of the scene 50, but not to a second, different, portion of the scene, to generate adapted stereoscopic content 60'.

In one example, the scene 50 is a cityscape comprising, at the bottom of the scene a road running from left-to-right, in the middle of the scene a row of buildings running from left to right across the scene, beyond the road, and a sky above and beyond the buildings. In this example, the first portion 50 can be a particular building within the row of buildings. Without highlighting, the stereoscopic content 60 produces a first three-dimensional model (a first stereoscopic effect). After highlighting, the adapted stereoscopic content 60' produces a second three-dimensional model (a second stereoscopic effect). The second three-dimensional model differs from the first three dimensional model in that the particular building, but no other, has been adapted within the three dimensional model. It may be differently sized or differently positioned for example. This highlights the particular building.

As illustrated in the example of Figs 4A, 4B the left-eye content 62 is for display to a left eye 82 of a user 80 and the right-eye content 64 is for display to a right eye of the user 80 and the adapted left-eye content 62' is for display to the left eye 82 of the user 80 and the adapted right-eye content 64' is for display to the right eye of the user 80.

The apparatus 100 comprises control means 30 that is configured to:
(i) identify for highlighting 54 a first portion 52 of a scene 50 defined by stereoscopic content 60 comprising left-eye content 62 and right-eye content 64;
(ii) selectively apply a stereoscopic mapping 70 to the first portion 52 of the scene 50 to generate adapted stereoscopic content 60' comprising adapted left-eye content 62' and adapted right-eye content 64'; and
(iii) cause rendering of the adapted stereoscopic content 60' by displaying the adapted left-eye content 62' to a left eye 82 of a user 80 and the adapted right-eye content 64' to a right eye 84 of the user 80.

Selectively applying a stereoscopic mapping 70 to the first portion 52 of the scene 50 comprises applying a stereoscopic mapping 70 to the first portion 52 of the scene 50 but not to a second, different, portion of the scene. The second, different, portion of the scene may have a different stereoscopic mapping applied or no stereoscopic mapping applied.

It should be appreciated that in some but not necessarily all examples, the control means 30 is configured to cause rendering by controlling a different device, not the apparatus 100, to perform the rendering.

It should be appreciated that in some but not necessarily all examples, the control means 30 is configured to cause rendering by controlling the apparatus 100 to perform the rendering.

In the example illustrated, the apparatus 100 comprises a left eye display 10 and a right eye display 20. The control means 30 causes rendering of the adapted stereoscopic content 60' by displaying the adapted left-eye content 62' to a left eye 82 of a user 80 via the left eye display 10 and the adapted right-eye content 64' to a right eye 84 of the user 80 via the right eye display 20.

In the example illustrated in Fig 3, the first portion 52 of the scene 50 is an area wholly within the scene and is not an edge portion of the scene. In some but not necessarily all examples the first portion 52 is an object within the scene 50 and the highlighting 54 of the first portion 52 of the scene 50 highlights 54 only the object. In some but not necessarily all examples the object within the scene may be selected automatically by the apparatus 100.

Examples of how highlighting 54 is achieved can be understood with reference to Figs 4A and 4B. The example illustrated in these Figs is only an illustrative example and it should be appreciated that other examples are possible.

Fig 4A illustrates how a user 80 sees the stereoscopic content 60. The first portion 52 of the scene 50 is represented as an object (illustrated using a black circle).

In this example the object is centrally located between the left eye 82 and the right eye 84 of the user 80 and lies on a plane 90 of zero binocular disparity. This plane corresponds to the plane of the left-eye and right-eye displays 10, 20.

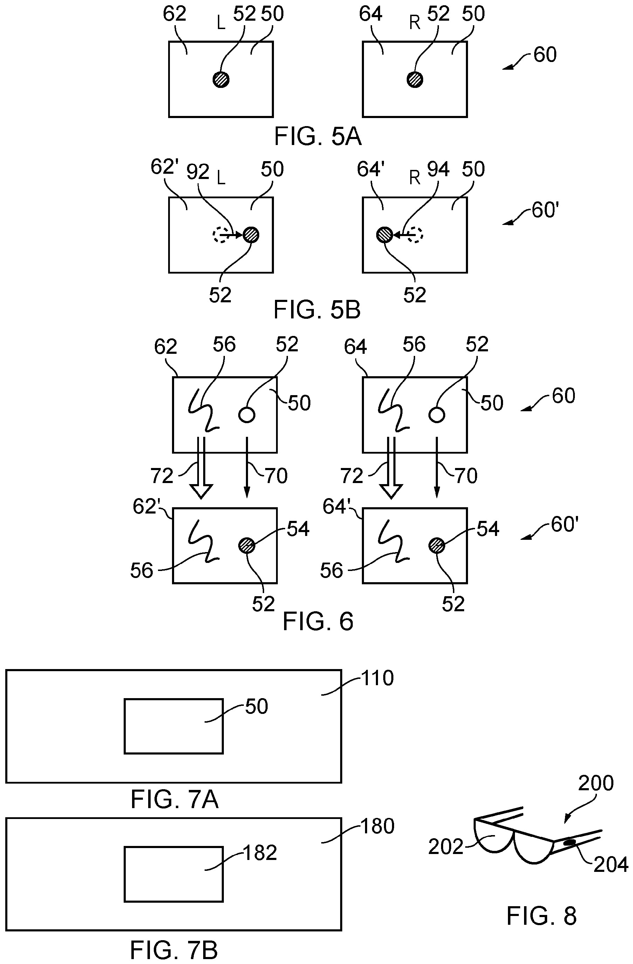

The stereoscopic content 60 rendered is illustrated in Fig 5A. The left-eye content 62 comprising the first portion 52 is displayed in the left-eye display 10. The right-eye content 64 comprising the first portion 52 is displayed in the right-eye display 20.

If the object, represented by the displayed first portion 52, is viewed alternately through the user's left eye 82 (only) and the user's right eye 84 (only), it does not change position. The virtual object corresponding to the displayed first portion 52 is located at the plane 90 and has zero disparity.

Fig 4B illustrates how a user sees the adapted stereoscopic content 60'. The first portion 52 of the scene 50 is represented as a virtual object (illustrated using a black circle).

The adapted stereoscopic content 60' rendered is illustrated in Fig 5B. The left-eye content 62 comprising the first portion 52 is displayed in the left-eye display 10. The right-eye content 64 comprising the first portion is displayed in the right-eye display 20.

In this example, the portion 52 of the scene 50 (the object) has been moved to the right in the adapted left-eye content 62' (illustrated using a circle). That is a disparity 92 is applied by the stereographic mapping 70. Also, the portion 52 of the scene 50 (the object) has been moved to the left in the adapted right-eye content 64' (illustrated using a circle). That is a disparity 94 is applied by the stereographic mapping 70.

The consequence of this can be understood from Fig 4B.

If the object, represented by the displayed first portion 52, is viewed alternately through the user's left eye 82 (only) and the user's right eye 84 (only), it changes position by the sum of the disparities 92, 94.

The virtual object 96 created when the displayed first portion 52 in the adapted stereoscopic content 60' is viewed simultaneously through both eyes is located in front of the plane 90. The virtual object 96 has therefore been highlighted 54 by reducing its virtual depth in the scene 50.

The virtual object 96 is still centrally located between the left eye 82 and the right eye 84 of the user 80 as a consequence of adapting the stereoscopic content 60 however it now appears closer.

The stereoscopic mapping 70 applied to the first portion 52 of the scene 50 changes a virtual depth of the first portion 52 of the scene as defined by the adapted left-eye content 62' and the adapted right-eye content 64'.

A first disparity 92 is applied to the first portion 52 of the scene defined by the left-eye content 62 and a second disparity 94 is applied to the first portion 52 of the scene 50 defined by the right-eye content 64.

The disparities 92, 94 are selectively applied. For example, the disparities 92, 94 are applied only to the first portion 52 and not to other portions of the scene 50 surrounding the first portion 52 or not to any other portions of the scene 50. If disparities are applied to other portions of the scene then they will be of different magnitude to the disparities 92,94. The first disparity 92 will be a different disparity than is applied to other portions of the scene 50 defined by the left-eye content 62 and the second disparity 94 will be a different disparity than is applied to other portions of the scene 50 defined by the right-eye content 64.

In the example illustrated in Fig 4B, a common disparity, in the opposite sense, is applied to the first portion 52 of the scene defined by the left-eye content and defined by the right-eye content. That is the first disparity 92 is -D and the second disparity 94 is +D. This has the effect of maintaining the bearing from the user to the object 96 represented by the first portion 52.

In this example, the stereoscopic mapping applied to the first portion 52 is applied with respect to a horizontal direction only. The stereoscopic mapping 70 applied to the first portion has no effect with respect to a vertical direction.

The adapted stereoscopic content 62' has therefore been generated from the original stereoscopic content 62. The disparity associated with the stereoscopic content 62 is selectively changed for the first portion 52 of the scene 50. The disparity change is the same value but the opposite sense, for the left-eye content and the right-eye content. The disparity change is defined by a Euclidian shift in the horizontal direction.

A similar highlighting 54 effect can be achieved by re-scaling, for example magnifying, the first portion 52 of the scene 50. When the stereoscopic mapping 70 applied to the first portion 52 of the scene 50 magnifies the first portion 52 of the scene 50 in the adapted left-eye content 62' and the adapted right-eye content 64', it has an effect similar to changing disparity. The magnification may be applied in the fronto-parallel plane (width-height plane). The object represented by the first portion 52 appears closer.

A similar highlighting 54 effect can be achieved by digitally processing the stereoscopic content to change a virtual camera separation associated with the stereoscopic content. This is similar to changing the position of the plane 90.

Fig 6 schematically illustrates that in at least some examples the first stereoscopic mapping 70 is applied to the first portion 52 of the scene 50 while a second, different, stereoscopic mapping 72 is applied to a second, different, portion 56 of the scene 50 to generate the adapted stereoscopic content 60'. In some but not necessarily all examples, the second portion 56 of the scene 50 borders the first portion 52 of the scene 50 on multiple sides.

FIG 7A illustrates an example of a scene 50. In this example the scene 50 is a part of a larger image 110. The larger image 110 may, for example, be a still image or a frame of a video image or an image for a game. The larger image 110 may be wholly or partly a real, captured image. The larger image 110 may be wholly or partly a synthetic, generated image.

In some examples, the larger image 110 may be an image that has a field of view horizontally that exceeds the displayed horizontal field of view and/or has a field of view vertically that exceeds the displayed vertical field of view. In some examples, the larger image 110 may be a panoramic image. A panoramic image can have a field of view in the horizontal plane between for example 90° and 360°. A panoramic image can have a field of view in the vertical plane up to +90° and down to -90°.

In some examples, the scene 50 is a user-selectable part of the image 110. For example, a user may give instructions that change a three-dimensional bearing and the scene 50 may be centered on the three-dimensional bearing.

In some examples, the three-dimensional bearing may be obtained by tracking a three-dimensional orientation of a head of a user 80. This may be achieved in various ways using sensors.

While in the example illustrated the scene 50 is a part of the larger image 110 in other examples the scene 50 may be a reduced-scale version of the larger image 110 (a zoomed-out image) inset within a larger-scale part of that larger image (a zoomed-in image).

Thus, as illustrated in FIG 7B, the highlighting effect can be applied to a viewport 180, or it can be applied to an inset window 182. In some but not necessarily all examples, the inset window 182 is shown on top of the viewport.

The highlighting effect can, for example, be applied to the zoomed-in image in the viewport 180 and/or can, for example, be applied to the zoomed-out image in the inset window 182.

When highlighting is applied to a zoomed-out image displayed within the inset window 182, the portion of the zoomed-out image that is highlighted may be the portion of the zoomed-out image that corresponds to the zoomed-in image displayed within the viewport 180. Alternatively or additionally, when highlighting is applied to a zoomed-out image displayed within the inset window 182, the portion(s) of the zoomed-out image that is highlighted may be an object(s) of interest within the zoomed-out image that may, for example, be outside the zoomed-in image displayed within the viewport 180.

In some but not necessarily all examples, the inset window 182 displays the zoomed-out image with a wide field of view in panoramic format- the inset window 182 is then a panoramic overview window. The panoramic overview window 182 can show the entire 360-degree view of the image (or a subset of it but anyway a broader area than what is shown on the viewport).

The viewer can use the inset window 182, for example the panoramic overview window, to view the zoomed-out image as a guide to find salient highlights outside the zoomed-in image displayed within the current viewport 180.

The inset window 182 can be opaque or transparent, and it may be positioned at different locations (top, bottom, corner, etc.). The inset window 182 may also surround the area the user is viewing, and be rendered on the edges of the viewport 180.

The inset window 182 may have static content (static zoomed-out image), or it may have content that is rotated as the viewer turns around so that the current viewport (zoomed-in image) is always at the center of the panoramic overview (zoomed-out image).

The inset window 182 can be shown and hidden during the viewing session, e.g., the overview can be presented only when there is something interesting in the zoomed-out image (e.g. the 360-degree video) that is not visible in the current viewport (current zoomed-in image).

The zoomed-in image and/or zoomed-out images may be a video, an animation, an image, a 3D image, a gradually updated panoramic image, or a combination of those.

In addition to fully immersive 360-degree panoramic content, similar techniques can also be used with panoramic content with a smaller field of view (e.g., 180 or 270 degrees).

In addition to video, similar techniques can also be used with still 360-degree panorama pictures or fully synthetic virtual reality environments (e.g., game worlds). In addition to video playback, similar techniques can also be used to create thumbnails for the video (for example, in the gallery view).

In some examples, the apparatus 100 comprises a left eye display 10 and a right eye display 20. The apparatus may, for example be a stereoscopic display system or a head-mounted apparatus 200, for example. The user may be able to determine what portion of an image defines the scene 50 rendered by changing a position and/or orientation of a point of view. This may be achieved using manual controls that responds to touch or gesture or automatically by tracking orientation and/or position of a user or user's head or a device held by the user.

Fig 8 illustrates a head-mounted apparatus 200 that is worn by the user 80 and that tracks the user's head. The apparatus 200 comprises orientation tracking circuitry 204. The head-mounted apparatus 200, in this example, comprises a visor 202 that comprises the left-eye display 10 and the right eye display 20. When the head-mounted apparatus 200, is worn by the user, the left-eye display 10 is aligned with the user's left eye 82 and the right-eye display 20 is aligned with the right eye 84.

In some examples, the visor 202 is configured as a see-through display visor for augmented reality.

In some examples, the visor 202 is opaque and configured as a non-see-through display visor for virtual reality.

In some but not necessarily all examples, the apparatus 100 may be the head-mounted apparatus 200.

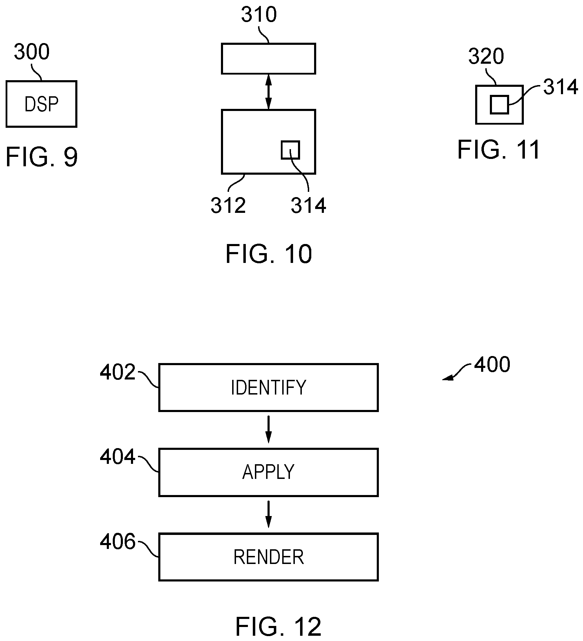

In some but not necessarily all examples, the apparatus 100 additionally comprises digital processing means 300 as illustrated in Fig 9. These may, for example be used as the control means 30.

In one example, the digital processing means 300 is configured to digitally process the scene 50 and detect an object. The first portion 52 of the scene 50 corresponds to the detected object within the scene 50. The detection of an object can be achieved using computer vision algorithms.

In this example, or other examples, the digital processing means 300 is configured to process the adapted stereoscopic content 60' to reduce artefacts arising from the intentional three-dimensional distortions introduced by the three-dimensional stereoscopic mapping 70 by, for example, applying a transitioning effect at at least some boundaries of the first portion 52 of the scene 50.

The control means 30 controls the three-dimensional stereoscopic mapping 70 used to create the adapted stereoscopic content 60'. The selective stereoscopic mapping 70 may be a fixed mapping applied to a variable first portion 52 of the scene 50. Alternatively, the selective stereoscopic mapping 70 may be a variable mapping applied to a variable first portion 52 of the scene 50. The control means 30 may for example select which one of a plurality of different stereoscopic mappings 70 is applied.

Examples of stereoscopic mappings 70 have previously been described and include, for example, varying a virtual camera separation (hyper-stereo), magnification in a fronto-parallel plane, disparity modification.

In some but not necessarily all examples, the stereoscopic mapping 70 used on a first portion 52 of a scene 50 to create adapted stereoscopic content 60' may be dependent upon distance, for example, a depth of an object represented by the first portion 52 within the scene. If the object is a distant object, for example further away than a first threshold distance, then hyper-stereo (increase of virtual camera base) with no equivalent re-scaling may be selectively applied to the first portion 52 of the scene 50. If the object is a close object, for example closer than a second threshold distance, then re-scaling in a fronto-parallel plane (e.g. zoom magnification) with no equivalent change in virtual camera base may be selectively applied to the first portion 52 of the scene 50.

In some examples highlighting 54 may be achieved by application of a stronger(enhanced) effect, for example, making the object bigger, nearer.

In some examples highlighting 54 may be achieved by application of a weaker (flattened) effect, for example, making the object smaller, further away.

The selection of what highlighting effect to apply and where to apply it can, for example, be based on data processing so that, for example, salient content/objects are highlighted.

The determination of what content 52 to highlight 54 can, for example, be based on:
manual selection or annotation of content, by for example, an editor;
determining an importance of content within the scene and highlighting the most important content; and
determining content that is most likely to be of interest to the user based on a profile of the user.

The highlighting 54 can be achieved, as previously described, by adjusting the three-dimensional stereoscopic effect relative to the rest of the scene. An intentional 3D distortion in the perceived scene 50 is applied. This can, for example, be applied as:
1) as different scene magnifications in the fronto-parallel (or width and height) directions, and in the depth direction; or
2) different viewing geometries (increasing or decreasing the camera base)

For distant objects hyper stereo can be used for highlighting them. In practice the positions of the (virtual) cameras contributing to the image content pair 62, 64 are adjusted and the camera base separation increased so that it exceeds the average human interpupillary distance of 63 mm. In this case the captured image is rendered so that the depth perception of the distant objects is enhanced. Hyper stereo may also quantize the parallax. In practice, quantized parallax would be perceived as cardboarding, where different objects seem to be well separated in depth, but the objects themselves are perceived flat. This may help in separating the objects from the background.

For highlighting the objects closer to the camera, the content can be rendered on the display with e.g. 6x zoom. The positions of the (virtual) cameras contributing to the image content pair 62, 64 are maintained so that the stereo base (parallax) of the cameras is not adjusted in proportion to the zoom (perspective), When for instance a 6x zoom is used, the size of the objects will reflect their size on 1/6 of the distance, even though their position in depth isn't.

The 3D stereoscopic effect for the salient highlights 54 can be either stronger (enhanced) or weaker (flattened) compared to the rest of the scene. The strength of the 3D stereoscopic effect may indicate the importance of the highlight (for example, a more important highlight may have a stronger 3D stereoscopic effect).

The effect may be applied constantly. Alternatively, the effect may be activated and deactivated manually by user commands, based on instructions provided by a content author, or automatically by an adaptive system that monitors the user behavior.

Salient highlights in the captured content can be detected using various criteria, or using some dedicated detection methods or combinations of those. These methods may include, e.g., utilizing recognized visual features, recognized audio sources, recognized ambient audio features, artificial intelligence (Al) based object recognition, biosensing data of earlier or current viewers of the content, data of the capturing device movement, or pattern matching of the capturing device movement for identifying, e.g., the playing field. Salient highlights can be manually marked by content authors, and can be e.g. objects important for following the storyline. Salient highlights 54 can be crowdsourced from the viewer community, or automatically recognized by analyzing the behaviors of a large number of viewers (e.g., common gaze directions and/or head orientations at different points in the video). Furthermore, contextual data can be utilized, either as such, or, e.g., in combination with other information to improve the recognition results.

Recognized visual features may include e.g. elements and/or patterns of individual and team games/sports (speed, footwork, lines, blocks, wheels, intersections, offsides), features which can be connected to ambient audio features, and for sports with a program set to music features with recognizable connections between the music and the synchronized routine.

Ambient audio features may include, e.g., recognized keywords, keywords matching the recognized visual features, recognized song, song matching the recognized visual features, or "cheering".

Content authors may define data to highlight the salient highlights 54 and to guide the viewer's focus in 360-degree videos.

The salient highlights 54 allow viewers (users) to find and to avoid missing the salient highlights in 360-degree videos.

The salient highlights 54 can be used with any content - no specific viewer cues (e.g., lighting, sounds, actors' behavior) need to be included in the video content.

The selective stereoscopic mapping 70 provide a subtle and natural way for indicating the salient highlights 54 (compared to, for example, adding graphical overlays with arrows, frames, or text on top of the video)

The use of selective stereoscopic mapping 70 to provide highlights 54 is particularly useful for immersive video, for example, immersive 360-degree video player and content.

Fig 10 illustrates an example of a controller 30. Implementation of a controller 30 may be as controller circuitry. The controller 30 may be implemented in hardware alone, have certain aspects in software including firmware alone or can be a combination of hardware and software (including firmware).

As illustrated in Fig 10 the controller 30 may be implemented using instructions that enable hardware functionality, for example, by using executable instructions of a computer program 314 in a general-purpose or special-purpose processor 310 that may be stored on a computer readable storage medium (disk, memory etc) to be executed by such a processor 310.

The processor 310 is configured to read from and write to the memory 312. The processor 310 may also comprise an output interface via which data and/or commands are output by the processor 310 and an input interface via which data and/or commands are input to the processor 310.

The memory 312 stores a computer program 314 comprising computer program instructions (computer program code) that controls the operation of the apparatus 100 when loaded into the processor 310. The computer program instructions, of the computer program 314, provide the logic and routines that enables the apparatus to perform the methods illustrated in Figs 12. The processor 310 by reading the memory 312 is able to load and execute the computer program 314.

The apparatus 100 therefore comprises:
at least one processor 310; and
at least one memory 312 including computer program code
the at least one memory 312 and the computer program code configured to, with the at least one processor 310, cause the apparatus 100 at least to perform:
   identifying for highlighting a first portion of a scene defined by stereoscopic content comprising left-eye content and right-eye content;
   selectively applying a stereoscopic mapping to the first portion of the scene, but not a second portion of the scene, to generate adapted stereoscopic content comprising adapted left-eye content and adapted right-eye content; and
   causing rendering of the adapted stereoscopic content by displaying the adapted left-eye content to a left eye of a user and the adapted right-eye content to a right eye of a user.

As illustrated in Fig 11, the computer program 314 may arrive at the apparatus 100 via any suitable delivery mechanism 320. The delivery mechanism 320 may be, for example, a machine readable medium, a computer-readable medium, a non-transitory computer-readable storage medium, a computer program product, a memory device, a record medium such as a Compact Disc Read-Only Memory (CD-ROM) or a Digital Versatile Disc (DVD) or a solid state memory, an article of manufacture that comprises or tangibly embodies the computer program 314. The delivery mechanism may be a signal configured to reliably transfer the computer program 314. The apparatus 100 may propagate or transmit the computer program 314 as a computer data signal.

The computer program instructions 314 are for causing an apparatus 100 to perform at least the following or for performing at least the following:
identifying for highlighting a first portion of a scene defined by stereoscopic content comprising left-eye content and right-eye content;
selectively applying a stereoscopic mapping to the first portion of the scene, but not a second portion of the scene, to generate adapted stereoscopic content comprising adapted left-eye content and adapted right-eye content; and
causing rendering of the adapted stereoscopic content by displaying the adapted left-eye content to a left eye of a user and the adapted right-eye content to a right eye of a user.

The computer program instructions may be comprised in a computer program, a non-transitory computer readable medium, a computer program product, a machine readable medium. In some but not necessarily all examples, the computer program instructions may be distributed over more than one computer program.

Although the memory 312 is illustrated as a single component/circuitry it may be implemented as one or more separate components/circuitry some or all of which may be integrated/removable and/or may provide permanent/semi-permanent/ dynamic/cached storage.

Although the processor 310 is illustrated as a single component/circuitry it may be implemented as one or more separate components/circuitry some or all of which may be integrated/removable. The processor 310 may be a single core or multi-core processor.

References to 'computer-readable storage medium', 'computer program product', 'tangibly embodied computer program' etc. or a 'controller', 'computer', 'processor' etc. should be understood to encompass not only computers having different architectures such as single /multi- processor architectures and sequential (Von Neumann)/parallel architectures but also specialized circuits such as field-programmable gate arrays (FPGA), application specific circuits (ASIC), signal processing devices and other processing circuitry. References to computer program, instructions, code etc. should be understood to encompass software for a programmable processor or firmware such as, for example, the programmable content of a hardware device whether instructions for a processor, or configuration settings for a fixed-function device, gate array or programmable logic device etc.

Fig 12 illustrates an example of a method 400 comprising:
at block 402, identifying for highlighting a first portion of a scene defined by stereoscopic content comprising left-eye content and right-eye content;
at block 404, selectively applying a stereoscopic mapping to the first portion of the scene, but not a second portion of the scene, to generate adapted stereoscopic content comprising adapted left-eye content and adapted right-eye content; and
at block 406, causing rendering of the adapted stereoscopic content by displaying the adapted left-eye content and the adapted right-eye content. The adapted left-eye content may be displayed to a left eye of a user and the adapted right-eye content may be displayed to a right eye of a user.

The method 300 can be performed at content creation before distribution or storage of content for rendering.

The method 300 can be performed after content creation before rendering the content to the user.

The method 300 can be performed at or after rendering the content to the user.

The method may, for example be performed by a computer program. The computer program 314 when run on a processor enables the processor 310 to perform:
identifying for highlighting a first portion of a scene defined by stereoscopic content comprising left-eye content and right-eye content;
selectively applying a stereoscopic mapping to the first portion of the scene, but not a second portion of the scene, to generate adapted stereoscopic content comprising adapted left-eye content and adapted right-eye content; and
causing rendering of the adapted stereoscopic content by displaying the adapted left-eye content and the adapted right-eye content. The adapted left-eye content may be displayed to a left eye of a user and the adapted right-eye content may be displayed to a right eye of a user.

As used in this application, the term 'circuitry' may refer to one or more or all of the following:
(a) hardware-only circuitry implementations (such as implementations in only analog and/or digital circuitry) and
(b) combinations of hardware circuits and software, such as (as applicable):
   (i) a combination of analog and/or digital hardware circuit(s) with software/firmware and
   (ii) any portions of hardware processor(s) with software (including digital signal processor(s)), software, and memory(ies) that work together to cause an apparatus, such as a mobile phone or server, to perform various functions and
(c) hardware circuit(s) and or processor(s), such as a microprocessor(s) or a portion of a microprocessor(s), that requires software (e.g. firmware) for operation, but the software may not be present when it is not needed for operation.
This definition of circuitry applies to all uses of this term in this application, including in any claims. As a further example, as used in this application, the term circuitry also covers an implementation of merely a hardware circuit or processor and its (or their) accompanying software and/or firmware. The term circuitry also covers, for example and if applicable to the particular claim element, a baseband integrated circuit for a mobile device or a similar integrated circuit in a server, a cellular network device, or other computing or network device.

The blocks illustrated in the Figs 12 may represent steps in a method and/or sections of code in the computer program 314. The illustration of a particular order to the blocks does not necessarily imply that there is a required or preferred order for the blocks and the order and arrangement of the block may be varied. Furthermore, it may be possible for some blocks to be omitted.

Components described may be operationally coupled and any number or combination of intervening elements can exist (including no intervening elements)

Where a structural feature has been described, it may be replaced by means for performing one or more of the functions of the structural feature whether that function or those functions are explicitly or implicitly described.

In some but not necessarily all examples, the apparatus 100 is configured to communicate data from the apparatus 100 with or without local storage of the data in a memory 312 at the apparatus 100 and with or without local processing of the data by circuitry or processors at the apparatus 100.

The data may, for example, be measurement data or data produced by the processing of measurement data.

The data may be stored in processed or unprocessed format remotely at one or more devices. The data may be stored in the Cloud.

The data may be processed remotely at one or more devices. The data may be partially processed locally and partially processed remotely at one or more devices.

The data may be communicated to the remote devices wirelessly via short range radio communications such as Wi-Fi or Bluetooth, for example, or over long range cellular radio links. The apparatus may comprise a communications interface such as, for example, a radio transceiver for communication of data.

The apparatus 100 may be part of the Internet of Things forming part of a larger, distributed network.

The processing of the data, whether local or remote, may be for the purpose of health monitoring, data aggregation, patient monitoring, vital signs monitoring or other purposes.

The processing of the data, whether local or remote, may involve artificial intelligence or machine learning algorithms. The data may, for example, be used as learning input to train a machine learning network or may be used as a query input to a machine learning network, which provides a response. The machine learning network may for example use linear regression, logistic regression, vector support machines or an acyclic machine learning network such as a single or multi hidden layer neural network.

The processing of the data, whether local or remote, may produce an output. The output may be communicated to the apparatus 100 where it may produce an output sensible to the subject such as an audio output, visual output or haptic output.

The recording of content or data may comprise only temporary recording, or it may comprise permanent recording or it may comprise both temporary recording and permanent recording. Temporary recording implies the recording of data temporarily. This may, for example, occur during sensing or image capture, occur at a dynamic memory, occur at a buffer such as a circular buffer, a register, a cache or similar. Permanent recording implies that the data is in the form of an addressable data structure that is retrievable from an addressable memory space and can therefore be stored and retrieved until deleted or over-written, although long-term storage may or may not occur. The use of the term 'capture' in relation to an image relates to temporary recording of the data of the image. The use of the term 'store' in relation to an image relates to permanent recording of the data of the image.

The systems, apparatus, methods and computer programs may use machine learning which can include statistical learning. Machine learning is a field of computer science that gives computers the ability to learn without being explicitly programmed. The computer learns from experience E with respect to some class of tasks T and performance measure P if its performance at tasks in T, as measured by P, improves with experience E. The computer can often learn from prior training data to make predictions on future data. Machine learning includes wholly or partially supervised learning and wholly or partially unsupervised learning. It may enable discrete outputs (for example classification, clustering) and continuous outputs (for example regression). Machine learning may for example be implemented using different approaches such as cost function minimization, artificial neural networks, support vector machines and Bayesian networks for example. Cost function minimization may, for example, be used in linear and polynomial regression and K-means clustering. Artificial neural networks, for example with one or more hidden layers, model complex relationship between input vectors and output vectors. Support vector machines may be used for supervised learning. A Bayesian network is a directed acyclic graph that represents the conditional independence of a number of random variables.

The above described examples find application as enabling components of:
automotive systems; telecommunication systems; electronic systems including consumer electronic products; distributed computing systems; media systems for generating or rendering media content including audio, visual and audio visual content and mixed, mediated, virtual and/or augmented reality; personal systems including personal health systems or personal fitness systems; navigation systems; user interfaces also known as human machine interfaces; networks including cellular, non-cellular, and optical networks; ad-hoc networks; the internet; the internet of things; virtualized networks; and related software and services.

The term 'comprise' is used in this document with an inclusive not an exclusive meaning. That is any reference to X comprising Y indicates that X may comprise only one Y or may comprise more than one Y. If it is intended to use 'comprise' with an exclusive meaning then it will be made clear in the context by referring to "comprising only one.." or by using "consisting".

In this description, reference has been made to various examples. The description of features or functions in relation to an example indicates that those features or functions are present in that example. The use of the term 'example' or 'for example' or 'can' or 'may' in the text denotes, whether explicitly stated or not, that such features or functions are present in at least the described example, whether described as an example or not, and that they can be, but are not necessarily, present in some of or all other examples. Thus 'example', 'for example', 'can' or 'may' refers to a particular instance in a class of examples. A property of the instance can be a property of only that instance or a property of the class or a property of a sub-class of the class that includes some but not all of the instances in the class. It is therefore implicitly disclosed that a feature described with reference to one example but not with reference to another example, can where possible be used in that other example as part of a working combination but does not necessarily have to be used in that other example.

Although embodiments have been described in the preceding paragraphs with reference to various examples, it should be appreciated that modifications to the examples given can be made without departing from the scope of the claims.

Features described in the preceding description may be used in combinations other than the combinations explicitly described above.

Although functions have been described with reference to certain features, those functions may be performable by other features whether described or not.

Although features have been described with reference to certain embodiments, those features may also be present in other embodiments whether described or not.

The term 'a' or 'the' is used in this document with an inclusive not an exclusive meaning. That is any reference to X comprising a/the Y indicates that X may comprise only one Y or may comprise more than one Y unless the context clearly indicates the contrary. If it is intended to use 'a' or 'the' with an exclusive meaning then it will be made clear in the context. In some circumstances the use of 'at least one' or 'one or more' may be used to emphasis an inclusive meaning but the absence of these terms should not be taken to infer and exclusive meaning.

The presence of a feature (or combination of features) in a claim is a reference to that feature) or combination of features) itself and also to features that achieve substantially the same technical effect (equivalent features). The equivalent features include, for example, features that are variants and achieve substantially the same result in substantially the same way. The equivalent features include, for example, features that perform substantially the same function, in substantially the same way to achieve substantially the same result.

In this description, reference has been made to various examples using adjectives or adjectival phrases to describe characteristics of the examples. Such a description of a characteristic in relation to an example indicates that the characteristic is present in some examples exactly as described and is present in other examples substantially as described.

The use of the term 'example' or 'for example' or 'can' or 'may' in the text denotes, whether explicitly stated or not, that such features or functions are present in at least the described example, whether described as an example or not, and that they can be, but are not necessarily, present in some of or all other examples. Thus 'example', 'for example', 'can' or 'may' refers to a particular instance in a class of examples. A property of the instance can be a property of only that instance or a property of the class or a property of a sub-class of the class that includes some but not all of the instances in the class. It is therefore implicitly disclosed that a feature described with reference to one example but not with reference to another example, can where possible be used in that other example as part of a working combination but does not necessarily have to be used in that other example

Whilst endeavoring in the foregoing specification to draw attention to those features believed to be of importance it should be understood that the Applicant may seek protection via the claims in respect of any patentable feature or combination of features hereinbefore referred to and/or shown in the drawings whether or not emphasis has been placed thereon.

## Claims

1. An apparatus comprising means for:
identifying for highlighting a first portion of a scene defined by stereoscopic content comprising left-eye content and right-eye content;
selectively applying a stereoscopic mapping to the first portion of the scene but not to a second, different, portion of the scene, to generate adapted stereoscopic content comprising adapted left-eye content and adapted right-eye content; and
causing rendering of the adapted stereoscopic content by displaying the adapted left-eye content and the adapted right-eye content.

2. An apparatus as claimed in claim 1 comprising means for applying a first stereoscopic mapping to the first portion of the scene and to apply a second, different, stereoscopic mapping to a second, different, portion of the scene to generate the adapted stereoscopic content.

3. An apparatus as claimed in claim 2, wherein the second portion of the scene borders the first portion of the scene on multiple sides.

4. An apparatus as claimed in any preceding claim, wherein the scene is a user-selectable part of an image.

5. An apparatus as claimed in claim 4, wherein an orientation of a user's head is tracked to determine the part of the image defining the scene.

6. An apparatus as claimed in any preceding claim, wherein the first portion of the scene is an area wholly within the scene and not at an edge of the scene.

7. An apparatus as claimed in any preceding claim, wherein the first portion of the scene corresponds to a detected object within the scene.

8. An apparatus as claimed in any preceding claim, wherein the stereoscopic mapping applied to the first portion of the scene magnifies the first portion of the scene in the adapted left-eye content and the adapted right-eye content.

9. An apparatus as claimed in any preceding claim, wherein the stereoscopic mapping applied to the first portion of the scene changes a virtual depth of the first portion of the scene as defined by the adapted left-eye content and the adapted right-eye content.

10. An apparatus as claimed in any preceding claim, wherein a common first disparity, in the opposite sense, is applied to the first portion of the scene defined by the left-eye content and defined by the right-eye content, the first disparity being a different disparity than is applied to other portions of the scene.

11. An apparatus as claimed in any preceding claim, wherein a disparity associated with the stereoscopic content is selectively changed for the first portion of the scene.

12. An apparatus as claimed in any preceding claim further comprising means for processing the adapted stereoscopic content to apply a transitioning effect at least some boundaries of the first portion of the scene.

13. An apparatus as claimed in any preceding claim configured as a head mounted display device.

14. A method comprising:
identifying for highlighting a first portion of a scene defined by stereoscopic content comprising left-eye content and right-eye content;
selectively applying a stereoscopic mapping to the first portion of the scene, but not a second portion of the scene, to generate adapted stereoscopic content comprising adapted left-eye content and adapted right-eye content; and
causing rendering of the adapted stereoscopic content by displaying the adapted left-eye content and the adapted right-eye content.

15. A computer program that when run on a processor enables the processor to perform:
identifying for highlighting a first portion of a scene defined by stereoscopic content comprising left-eye content and right-eye content;
selectively applying a stereoscopic mapping to the first portion of the scene, but not a second portion of the scene, to generate adapted stereoscopic content comprising adapted left-eye content and adapted right-eye content; and
causing rendering of the adapted stereoscopic content by displaying the adapted left-eye content and the adapted right-eye content.
